# EUROPÄISCHE PATENTSCHRIFT

(11) **EP 1 861 288 B1**
(45) Veröffentlichungstag und Bekanntmachung des Hinweises auf die Patenterteilung: **26.11.2008**
(21) Anmeldenummer: 06722599.5
(22) Anmeldetag: 10.03.2006
(51) Int. Cl.: B60R 5/04

(54) **HECKKLAPPE FÜR EIN FAHRZEUG MIT ZUSÄTZLICHEM LADEGUTTRÄGER**
TAILGATE FOR A VEHICLE COMPRISING AN ADDITIONAL LOAD CARRIER
TRAPPE ARRIERE DESTINEE A UN VEHICULE COMPORTANT UN PORTE-BAGAGES SUPPLEMENTAIRE

(30) Priorität: 11.03.2005 DE 102005011680
(43) Veröffentlichungstag der Anmeldung: 05.12.2007
(73) Patentinhaber: Webasto AG, 82131 Stockdorf (DE)
(72) Erfinder: LEROY, Alain, 86911 Diessen-Dettenschwang (DE); PSCHORN, Heinz, 85221 Dachau (DE); BRAUN, Robert, 82335 Berg (DE); LEGLER, Dirk, 86947 Weil (DE); KOELBL, Michael, 82061 Neuried (DE); VOGT, Oliver, 80796 München (DE); RUDOLPH, Thomas, 82229 Hechendorf (DE); JAKIMENCZUK, Thomas, 85635 Höhenkirchen (DE)
(86) Internationale Anmeldenummer: PCT/DE2006/000442
(87) Internationale Veröffentlichungsnummer: WO 2006/094501

(56) Entgegenhaltungen:
- DE-A1- 3 610 777
- DE-A1- 4 424 611
- FR-A- 2 579 941
- US-A- 3 365 084
- US-A- 5 975 610

## Beschreibung

Die vorliegende Erfindung betrifft eine Heckklappe für ein Fahrzeug, bei der ein zusätzlicher Ladegutträger in die Heckklappe integriert ist, der gegenüber der Heckklappe um eine Achse schwenkbar beziehungsweise kippbar angeordnet ist und wenigstens eine in einer herausgeschwenkten Position etwa horizontal angeordnete Ladefläche für das Ladegut aufweist.

Aus dem Stand der Technik sind Heckklappen für Fahrzeuge bekannt geworden, bei denen ein zusätzlicher Ladegutträger in die Heckklappe integriert ist. Beispielsweise beschreibt die DE 44 24 611, die als nächsliegender Stand der Technik betrachtet wird, ein Fahrzeug mit einer Heckklappe, bei der in die Heckklappe eine weitere schwenkbare Klappe integriert ist, wobei diese Klappe in eine etwa horizontale Gebrauchsstellung herausschwenkbar ist und auf der Oberseite der herausgeklappten Klappe Mittel zur Befestigung verschiedener mitzuführender Lasten angeordnet sind, beispielsweise Profilschienen und eine Haltestange, so dass man auf der herausgeklappten Fläche Fahrräder transportieren kann. In der eingeklappten Position ist dieser Ladegutträger so in die Heckklappe integriert, dass dessen Außenseite mit dem Rahmen der Heckklappe bündig liegt. Die Heckklappe ist jedoch zweiwandig ausgeführt, wobei der eingeklappte Ladegutträger eine Außenwand bildet und zusätzlich noch eine weiter innenliegende Innenwand der Heckklappe vorhanden ist, die den eigentlichen Stauraum im Inneren des Fahrzeugs nach außen hin verschließt. Es ist also nicht möglich, den Ladegutträger dazu zu benutzen, Transportgut in den Innenraum des Fahrzeugs zu schaffen, da die Heckklappe in beiden Stellungen des Ladegutträgers verschlossen bleibt.

Die DE 42 31 568 A1 beschreibt einen Gepäckhalter für Fahrzeuge, bei dem in ähnlicher Weise eine herausklappbare Klappe in die Heckklappe integriert ist. Auch hier bleibt beim Herausklappen der als zusätzlicher Ladegutträger dienenden Klappe die Heckklappe selbst geschlossen, so dass der Laderaum nicht zugänglich wird. Eine alternative Ausführungsvariante sieht vor, dass eine Stoßstangeneinheit nach hinten herausziehbar ist, wodurch das Fahrzeug verlängert und ein zusätzlicher Ladegutträger geschaffen wird.

Aus dem US-Patent 1,588,740 ist ein den Heckbereich verlängernder herausziehbarer Ladegutträger bekannt. Bei dieser Einrichtung wird eine verlängerte Ladefläche und ein zusätzlicher Laderaum im Heckbereich geschaffen. Es wird hier zunächst eine gewöhnliche Kofferraumklappe nach oben geschwenkt. Danach kann der boxartige Ladegutträger ähnlich wie eine Schublade nach außen gezogen werden, wobei eine zusätzliche abgerundete Tür vorhanden ist, die bei geschlossenem Kofferraum die Kofferraumklappe nach hinten hin verlängert. Diese zusätzliche Tür ist schwenkbar und kann nach hinten hin abgeklappt werden. Durch Einschieben der Box nach dem Beladen ist es möglich, Ladegut in den Kofferraum zu verbringen. Dieses Prinzip ist jedoch nicht ohne weiteres übertragbar auf Fahrzeuge mit einer Heckklappe, die in der Regel um eine Achse im oberen Bereich schwenkt, anders als eine Kofferraumklappe bei einem Fahrzeug mit Stufenheck. Bei dieser bekannten Lösung ist bei herausgezogenem Ladegutträger die Kofferraumklappe geöffnet und die ausgezogene Position ist in der Regel nicht für den Fahrbetrieb vorgesehen. Zudem besteht dann auch die Gefahr, dass Abgase des Fahrzeugs in den Innenraum gelangen.

Die US-A-5,975,610 beschreibt einen Anhänger für ein Fahrzeug mit einer herunterklappbaren Rückwand für die Ladefläche. Wenn diese Rückwand in eine horizontale Lage ausgeklappt ist, kann sie als Sitzfläche benutzt werden. Dazu ist ein Sitzelement mit einer Sitzrückenlehne und einer Sitzfläche auf der Rückwand der Ladefläche befestigbar. Wenn die Rückwand in die geschlossene vertikale Position geklappt wird schwenkt der Sitz mit dieser Rückwand in eine Nichtgebrauchsstellung, in der er innerhalb des Laderaums liegt. Zum einen dient diese bekannte Einrichtung nur spezifisch als Sitzelement und dürfte als solches nur benutzbar sein, wenn der Anhänger abgestellt ist, beispielsweise bei einer Rast. Die Nutzung während der Fahrt für den Transport von Personen verbietet sich schon aus sicherheitstechnischen Gründen. Zum anderen handelt es sich um einen Anhänger mit nach oben offener Ladefläche, der ausschließlich Transportzwecken dient und nicht um ein Fahrzeug, in dessen Innenraum Personen befördert werden. Die Druckschrift gibt keine Anregung, ein schwenkbares oder kippbares Element in die Heckklappe eines Fahrzeugs zu integrieren.

Die DE 36 10 777 A1 beschreibt einen Personenkraftwagen mit einem seitlich in dem Raum zwischen dem Stoßfänger und dem hinteren Radkasten integrierten Klappfach. Dieses Klappfach dient als Stauraum für Gegenstände wie Bordwerkzeug, Feuerlöscher, Reserveteile oder dergleichen, die mit dem Fahrzeug mitgeführt, jedoch nur in bestimmten Fällen benötigt werden. An einem seitlich in Längsrichtung verlaufenden Fahrzeugrahmenholm ist eine Konsole angebracht, an der das Klappfach schwenkbar angebracht ist. Zum Öffnen wird das Klappfach in einer Kippbewegung herunter geklappt. In der geschlossenen Stellung liegt das Klappfach innerhalb der Kontur der Fahrzeugskarosserie. Das Klappfach hat jedoch keine Verbindung zum Innenraum oder Laderaum des Fahrzeugs. Es handelt sich um ein Fahrzeug mit Stufenheck, bei dem der Laderaum über eine gewöhnliche Kofferraumklappe verschlossen ist. Über das Klappfach ist es nicht möglich, Ladegut in das Innere des Kofferraums zu befördern. Die Kippkonstruktion des Klappfachs ist auch in einem anderen Bereich als die Kofferraumklappe seitlich und wesentlich weiter unten liegend angeordnet.

Die Aufgabe der vorliegenden Erfindung besteht darin, eine Heckklappe für ein Fahrzeug zur Verfügung zu stellen, bei der ein zusätzlicher Ladegutträger in die Heckklappe integriert ist, der das Verstauen von Ladegut in das Fahrzeuginnere beziehungsweise das Entladen von Ladegut aus dem Fahrzeuginneren einfach und rasch ermöglicht, ohne die Heckklappe des Fahrzeugs zu öffnen. Die Lösung dieser Aufgabe liefert eine erfindungsgemäße Heckklappe für ein Fahrzeug der eingangs genannten Gattung mit den kennzeichnenden Merkmalen des Hauptanspruchs.

Erfindungsgemäß ist vorgesehen, dass der in die Heckklappe integrierte Ladegutträger neben dem in der herausgeschwenkten Stellung etwa horizontal positionierten Ladeboden eine Kippwand umfasst, die mit dem Ladeboden in einem starren, vorzugsweise etwa rechten Winkel verbunden ist, wobei diese Kippwand in der eingeschwenkten Stellung des Ladegutträgers innerhalb des Laderaums des Fahrzeugs liegt. Vorzugsweise bildet diese Kippwand in der eingeschwenkten Stellung des Ladegutträgers eine etwa horizontale Fläche für das Ladegut im Inneren des Laderaums des Fahrzeugs. Die Außenseite der Ladefläche des Ladegutträgers liegt in der eingeschwenkten Stellung des Ladegutträgers vorzugsweise etwa bündig in der Ebene der Heckklappe.

Den erfindungsgemäß ausgebildeten Ladegutträger kann man bei geschlossener Heckklappe des Fahrzeugs herausschwenken in einer Kippbewegung, wodurch dann der Ladeboden eine etwa horizontale Stellung einnimmt. Das Ladegut kann man dann auf diesem Ladeboden ablegen und anschließend den gesamten Ladegutträger vorzugsweise in einer Schwenkbewegung von etwa 90° in die eingeschwenkte Position kippen. Dadurch gelangt das zuvor etwa horizontal positionierte Ladegut in die Ebene der Heckklappe, während die Kippwand in das Innere des Laderaums des Fahrzeugs gelangt. Mit dem Ladegutträger kippt dann das zuvor auf diesem abgelegte Ladegut einwärts in das Innere des Laderaums. Mit anderen Worten, das Ladegut bewegt sich bei dieser Kippbewegung durch die Ebene der Heckklappe hindurch, wobei bei diesem Vorgang die Heckklappe in ihrer geschlossenen Stellung verbleibt. In der Endstellung liegt dann das Ladegut im Inneren des Laderaums auf der Kippwand, die dort dann eine vorzugsweise etwa horizontale Ablagefläche bildet. Soll das Ladegut wieder ausgeladen werden, erfolgt die Kippbewegung im umgekehrten Drehsinn, so dass in der herausgeschwenkten Stellung das Ladegut dann wieder auf dem Ladeboden des Ladegutträgers liegt. Die erfindungsgemäße Lösung hat den besonderen Vorteil, dass man beispielsweise schweres oder sperriges Ladegut wesentlich einfacher in den Innenraum (Laderaum) des Fahrzeugs verbringen kann. Dieser Vorgang des Beladens kann ohne das Öffnen der Heckklappe erfolgen, was beispielsweise den Vorteil hat, dass man das Fahrzeug auch gegebenenfalls bei laufendem Motor bequem beladen kann, ohne dass Abgase in das Fahrzeuginnere einströmen. In der herausgeklappen Position des Ladegutträgers wird dabei die Öffnung in der Heckklappe durch die Kippwand verschlossen. In der eingeschwenkten Stellung ist die die Außenseite der Ladefläche bildende Seite der Klappe geschlossen. Anders als bei den zuvor beschriebenen aus dem Stand der Technik bekannten Lösungen ist das Ladegut nach dem Ladevorgang gegebenenfalls vom Innenraum des Fahrzeugs her zugänglich. Das Handling bei der Kippbewegung des Ladegutträgers zum Be- oder Entladen ist sehr komfortabel. Das Ladegut vollzieht beim Ladevorgang mit dem Ladegutträger eine 90°-Schwenkbewegung, was jedoch unproblematisch ist, da Kippwand und Ladeboden in einem vorzugsweise etwa rechten Winkel aufeinander stoßen und folglich das Ladegut in der eingeschwenkten Stellung die Kippwand als Standfläche nutzt. Gegebenenfalls wird das Ladegut so auf den Ladeboden in der herausgeschwenkten Stellung aufgelegt, dass die anschließende 90°-Bewegung beim Ladevorgang berücksichtigt wird und das Ladegut dann in der eingeschwenkten Transportstellung in der gewünschten aufrechten Stellung positioniert ist.

Gemäß einer bevorzugten Weiterbildung der Erfindung weist der Ladegutträger neben der Ladefläche und der Kippwand mindestens eine Seitenwand auf, vorzugsweise handelt es sich um zwei Seitenwände, die den Laderaum zwischen Ladefläche und Kippwand seitlich begrenzen. Diese Seitenwände können auch gegebenenfalls als Faltwände ausgebildet sein, so dass es möglich ist, gegebenenfalls den Ladegutträger in eine flache Nichtgebrauchsstellung zusammenzuklappen, in der die Kippwand flach auf der Ladefläche liegt. Bei dieser Variante müssen allerdings entsprechende Aussteifungselemente wie beispielsweise Stangen oder dergleichen vorhanden sein, die gewährleisten, dass in der Gebrauchsstellung die Seitenwände ausgesteift werden und der starre Winkel zwischen Kippwand und Ladeboden eingehalten wird, damit die gewünschte Funktion des Ladegutträgers gewährleistet bleibt.

Gemäß einer Weiterbildung der Erfindung ist vorgesehen, dass mindestens ein Dichtelement an der Kippwand und/oder an der Heckklappe vorhanden ist, welches in der ausgeschwenkten Position des Ladegutträgers zwischen Kippwand und Heckklappe beziehungsweise zum Laderaum des Fahrzeugs hin abdichtet. Ein solches Dichtelement verhindert das Einströmen von Abgasen in das Fahrzeuginnere bei herausgeschwenktem Ladegutträger.

Weiterhin ist es vorteilhaft, den Ladegutträger über geeignete Mittel in der ausgeschwenkten Position zu arretieren, wobei diese Arretierung gewährleisten sollte, dass der Ladegutträger in dieser arretierten Position für eine ausreichende Gewichtsbelastung durch schweres Ladegut ausgelegt ist.

Um den Ladevorgang weiter zu vereinfachen, kann gemäß einer Weiterbildung der Erfindung vorgesehen sein, dass Mittel vorhanden sind, beispielsweise in Form wenigstens eines Federelements, um die Schließbewegung/Kippfunktion des Ladegutträgers aus der ausgeschwenkten Position in die eingeschwenkte Position (Schließposition) und somit den Ladevorgang weiter zu vereinfachen. Durch diese Mittel wird das Beladen unterstützt und die Bedienungsperson muss weniger Kraft aufwenden, um beispielsweise ein auf die Ladefläche aufgelegtes schweres Ladegut durch Kippen des Ladegutträgers in den Laderaum des Fahrzeugs zu verbringen. Grundsätzlich ist es auch möglich, beispielsweise diesen Ladevorgang (Kippbewegung) beispielsweise motorisch oder pneumatisch zu unterstützen.

An dem Ladegutträger sind weiterhin vorzugsweise Anschlagmittel vorgesehen, die einen Endanschlag bilden beziehungsweise eine eingeschwenkte Schließposition des Ladegutträgers definieren. Außerdem ist es vorteilhaft, wenn eine Verriegelung des Ladegutträgers in der eingeschwenkten Position vorgesehen ist, die ein ungewolltes Öffnen verhindert, wobei zum Beispiel auch ein Schloss vorgesehen sein kann, um den eingeschwenkten Ladegutträger zu verschließen und zu sichern. Ähnlich wie bei einer Heckklappe des Fahrzeugs kann das Öffnen des Ladegutträgers über eine beispielsweise durch einen Funkschlüssel bedienbare Zentralverriegelung veranlasst werden.

Es kann gemäß einer Variante der Erfindung auch vorgesehen sein, dass das Kippmodul nicht fester Bestandteil der Heckklappe ist, sondern als separates Teil vorliegt, welches auf einen klappenförmigen Ladegutträger, der aus der Heckklappe eines Fahrzeugs herausschwenkbar ist, aufgesetzt wird und an diesem Ladegutträger lösbar befestigbar ist.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand eines Ausführungsbeispiels unter Bezugnahme auf die beiliegenden Zeichnungen näher erläutert. Dabei zeigen
- Fig. 1: eine schematisch stark vereinfachte Ansicht einer Heckklappe mit herausgeschwenktem Ladegutträger;
- Fig. 2: eine entsprechende Ansicht mit einwärts geschwenktem Ladegutträger nach dem Ladevorgang.

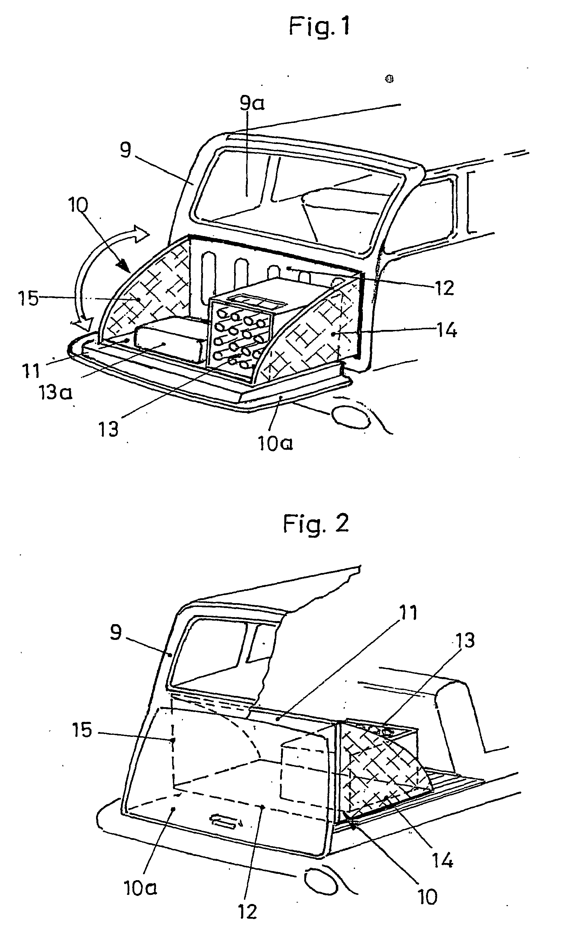

Zunächst wird auf Fig. 1 Bezug genommen. Fig. 1 zeigt in stark schematisch vereinfachter perspektivischer Ansicht einen Ausschnitt aus dem rückwärtigen Bereich eines hier nicht dargestellten Fahrzeugs. Im Prinzip ist die Heckklappe 9 des Fahrzeugs gezeigt, die wie eine herkömmliche Heckklappe um eine hier nicht dargestellte im oberen Bereich der Heckklappe liegende Achse zum Öffnen hochgeschwenkt werden kann. In der Skizze gemäß Fig. 1 angedeutet ist die in dem Rahmen der Heckklappe eingefasste Heckscheibe 9a. Unterhalb dieser Heckscheibe ist der erfindungsgemäße kippbare Ladegutträger angeordnet, der insgesamt mit dem Bezugszeichen 10 bezeichnet ist. Dieser Ladegutträger 10 umfasst im Prinzip eine um eine etwa horizontale Achse, die im unteren Bereich der Heckklappe 9 angeordnet ist, in die in Fig. 1 dargestellte Position in Pfeilrichtung herausschwenkbare Klappe 10a, die in der herausgeschwenkten Gebrauchsstellung in einer Endlage, die vorzugsweise etwa horizontal liegt, über geeignete Arretiermittel arretiert ist. Diese Arretiermittel sind in der Zeichnung nicht näher dargestellt.

Der Ladegutträger 10 umfasst nun weiterhin einen Ladeboden 11 beziehungsweise eine Ladefläche, auf welche man Ladegut 13, 13a stellen oder ablegen kann. Mit dieser Ladefläche 11 verbunden ist eine Kippwand 12, wobei vorzugsweise zusätzlich jeweils an beiden Seiten Seitenwände 14, 15 vorhanden sind, die einen Laderaum zwischen Kippwand 12 und Ladefläche 11 seitlich begrenzen. Dieser Laderaum kann beispielsweise im einfachsten Fall in seinem Volumen in etwa einem Viertelzylinder entsprechen, wobei es sich um einen gedachten Zylinder handelt, dessen Achse entlang der Berührungslinie zwischen Ladeboden 11 und Kippwand 12 verläuft. Dieser Ladegutträger 10 kann ein separates Teil sein, welches auf eine Fläche einer Klappe 10a aufgesetzt und dort befestigt wird. Der Ladegutträger kann aber auch mit der Klappe 10a verbunden sein oder einteilig ausgebildet sein und eine Klappe umfassen, die innenseitig den Ladeboden 11 bildet, an der die Kippwand 12 und die beiden Seitenwände 14 und 15 angebracht sind.

Wenn man nun den Ladegutträger 10 aus der in Fig. 1 dargestellten ausgeschwenkten Position in Pfeilrichtung um seine Achse einwärts in Richtung auf die Heckklappe 9 schwenkt, dann bewegt sich die Kippwand 12, die vorzugsweise mit der Ladefläche 11 starr verbunden ist, einwärts in den Laderaum des Fahrzeugs hinein. In der bevorzugten Endposition befindet sich dann die Kippwand 12 im Inneren des Fahrzeugs in einer etwa horizontalen Position und die Ladefläche 11 befindet sich etwa in der Ebene des unteren Bereichs der Heckklappe 9 und somit in einer etwa vertikalen Position. Bei dieser Kippbewegung beziehungsweise Schwenkbewegung wird das zuvor auf den Ladeboden 11 aufgelegte oder aufgesetzte Ladegut 13, 13a mitgeschwenkt und kippt um etwa 90°, so dass das sich danach im Inneren des Laderaums befindliche Ladegut 13, 13a nach der Schwenkbewegung des Ladegutträgers 10 auf der dann etwa horizontal angeordneten Kippwand 12 liegt. Die Kippwand 12 dient somit quasi als Ladefläche im Inneren des Laderaums des Fahrzeugs. Wichtig ist, dass bei diesem Schwenkvorgang die Heckklappe 9 in ihrer geschlossenen Stellung verbleiben kann. Man kann somit auch den umgekehrten Vorgang vollziehen, indem man beispielsweise bei eingeschwenktem Ladegutträger 10 vom Innenraum des Fahrzeugs aus zunächst Ladegut 13 auf die Kippwand 12 auflegt, so wie dies in Fig. 2 gezeigt ist und anschließend den Ladegutträger herausschwenkt um einen Winkel von beispielsweise 90° bis in seine vorzugsweise arretierte Endposition. Das Ladegut 13 vollzieht wiederum diese Schwenkbewegung mit und liegt anschließend auf der Ladefläche 11 und kann von außen zum Entladen des Fahrzeugs entnommen werden. Dabei liegt die Kippwand 12 dann in der Ebene der Heckklappe 9 und dichtet zum Fahrzeuginneren hin ab. Gegebenenfalls sind dazu Dichtelemente an der Kippwand 12 und/oder in dem an den Umriss der Kippwand angrenzenden Bereich der Heckklappe 9 vorgesehen, um diese Abdichtwirkung zu verbessern. Dadurch wird es möglich, dass man auch bei herausgeschwenktem Ladegutträger 10 verhindert, dass beispielsweise Abgase in das Fahrzeuginnere einströmen. Die erfindungsgemäße Lösung hat zudem den Vorteil, dass man insbesondere schweres oder sperriges Ladegut in das Fahrzeug einladen kann. Beispielsweise ist es auch denkbar, dass man ein schweres Ladegut mit Hilfsmitteln in der ausgeschwenkten Stellung des Ladegutträgers 10 auf der Ladefläche 11 ablegt und dann durch Einwärtskippen des Ladegutträgers in den Laderaum des Fahrzeugs verbringt. Die dabei von der das Fahrzeug ladenden Person aufzubringende Kraft kann gemäß einer bevorzugten Variante der Erfindung noch verringert werden, indem man geeignete Mittel vorsieht, die die Kippbewegung des Ladegutträgers unterstützen. Dies können beispielsweise Federelemente sein, Gasdruckfedern oder es kann sich auch gegebenenfalls um eine motorische Unterstützung handeln.

### Bezugszeichenliste

- 9: Heckklappe
- 9a: Heckscheibe
- 10: Ladegutträger
- 10a: herausschwenkbare Klappe
- 11: Ladeboden
- 12: Kippwand
- 13: Ladegut
- 13a: Ladegut
- 14: Seitenwand
- 15: Seitenwand

## Patentansprüche

1. Heckklappe für ein Fahrzeug, bei der ein zusätzlicher Ladegutträger in die Heckklappe integriert ist, der gegenüber der Heckklappe um eine Achse schwenkbar beziehungsweise kippbar angeordnet ist und wenigstens eine in einer herausgeschwenkten Position etwa horizontal angeordnete Ladefläche für das Ladegut aufweist,
**dadurch gekennzeichnet, dass** der Ladegutträger (10) wenigstens eine mit dem in der herausgeschwenkten Stellung etwa horizontal positionierten Ladeboden (11) in einem starren etwa rechten Winkel verbundene Kippwand (12) umfasst, die in der eingeschwenkten Stellung des Ladegutträgers innerhalb des Laderaums des Fahrzeugs liegt.

2. Heckklappe für ein Fahrzeug nach Anspruch 1, **dadurch gekennzeichnet, dass** die Kippwand (12) in der eingeschwenkten Stellung des Ladegutträgers (10) eine etwa horizontale Fläche für das Ladegut im inneren des Laderaums des Fahrzeugs bildet.

3. Heckklappe für ein Fahrzeug nach Anspruch 1 oder 2, **dadurch gekennzeichnet, dass** die Außenseite der Ladefläche (11) des Ladegutträgers (10) in der eingeschwenkten Stellung des Ladegutträgers etwa bündig in der Ebene der Heckklappe (9) liegt.

4. Heckklappe für ein Fahrzeug nach einem der Ansprüche 1 bis 3, **dadurch gekennzeichnet, dass** die Kippwand (12) des Ladegutträgers (10) in der ausgeschwenkten Stellung den Laderaum des Fahrzeugs nach außen hin verschließt.

5. Heckklappe für ein Fahrzeug nach einem der Ansprüche 1 bis 4, **dadurch gekennzeichnet, dass** der Ladegutträger (10) mindestens eine, vorzugsweise zwei an beiden Seiten angeordnete Seitenwände (14, 15) aufweist, die einen Laderaum zwischen Ladefläche (11) und Kippwand (12) seitlich begrenzen.

6. Heckklappe für ein Fahrzeug nach einem der Ansprüche 1 bis 5, **dadurch gekennzeichnet, dass** mindestens ein Dichtelement an der Kippwand (12) und/oder an der Heckklappe (9) vorgesehen ist, welches in der ausgeschwenkten Position des Ladegutträgers (10) zwischen Kippwand (12) und Heckklappe (9) beziehungsweise zum Laderaum des Fahrzeugs hin abdichtet.

7. Heckklappe für ein Fahrzeug nach einem der Ansprüche 1 bis 6, **dadurch gekennzeichnet, dass** Mittel vorgesehen sind, um den Ladegutträger (10) in der ausgeschwenkten Position zu arretieren.

8. Heckklappe für ein Fahrzeug nach einem der Ansprüche 1 bis 7, **dadurch gekennzeichnet, dass** Mittel vorgesehen sind, insbesondere in Form wenigstens eines Federelements, um die Schließbewegung/Kippfunktion des Ladegutträgers (10) aus der ausgeschwenkten Position in die eingeschwenkte Position (Schließposition) zu unterstützen.

9. Heckklappe für ein Fahrzeug nach einem der Ansprüche 1 bis 8, **dadurch gekennzeichnet, dass** Anschlagmittel (17) vorgesehen sind, an dem Ladegutträger (10), die einen Endanschlag bilden beziehungsweise eine eingeschwenkte Schließposition des Ladegutträgers (10) definieren.

10. Heckklappe für ein Fahrzeug nach einem der Ansprüche 1 bis 9, **dadurch gekennzeichnet, dass** ein Kippmodul umfassend einen Ladeboden (11) und eine Kippwand (12) auf einen Ladegutträger (10), der aus einer Heckklappe (9) eines Fahrzeugs herausschwenkbar ist, aufsetzbar und an diesem lösbar befestigbar ist.

11. Kraftfahrzeug, **gekennzeichnet durch** eine Heckklappe und/oder einen Ladegutträger mit den Merkmalen eines der Ansprüche 1 bis 10.

## Claims

1. Tailgate for a vehicle, in which an additional load carrier is integrated in the tailgate, said load carrier being arranged in a manner such that it can be pivoted or tilted about an axis in relation to the tailgate and having at least one loading surface area for the load, which loading surface is arranged approximately horizontally in an outwardly pivoted position, **characterized in that** the load carrier (10) comprises at least one tilting wall (12) which is connected at a rigid angle, approximately a right angle, to the loading floor (11), which is positioned approximately horizontally in the outwardly pivoted position, and which tilting wall lies within the loading space of the vehicle in the inwardly pivoted position of the load carrier.

2. Tailgate for a vehicle according to Claim 1, **characterized in that,** in the inwardly pivoted position of the load carrier (10), the tilting wall (12) forms an approximately horizontal surface for the load in the interior of the loading space of the vehicle.

3. Tailgate for a vehicle according to Claim 1 or 2, **characterized in that,** in the inwardly pivoted position of the load carrier, the outside of the loading surface (11) of the load carrier (10) lies approximately flush in the plane of the tailgate (9).

4. Tailgate for a vehicle according to one of Claims 1 to 3, **characterized in that,** in the outwardly pivoted position, the tilting wall (12) of the load carrier (10) outwardly closes the loading space of the vehicle.

5. Tailgate for a vehicle according to one of Claims 1 to 4, **characterized in that** the load carrier (10) has at least one, preferably two, side walls (14, 15) which are arranged on either side and laterally delimit a loading space between the loading surface (11) and tilting wall (12).

6. Tailgate for a vehicle according to one of Claims 1 to 5, **characterized in that** at least one sealing element is provided on the tilting wall (12) and/or on the tailgate (9), said sealing element, in the outwardly pivoted position of the load carrier (10), providing a seal between the tilting wall (12) and tailgate (9) and towards the loading space of the vehicle.

7. Tailgate for a vehicle according to one of Claims 1 to 6, **characterized in that** means are provided in order to lock the load carrier (10) in the outwardly pivoted position.

8. Tailgate for a vehicle according to one of Claims 1 to 7, **characterized in that** means are provided, in particular in the form of at least one spring element, in order to assist the closing movement/tilting function of the load carrier (10) from the outwardly pivoted position into the inwardly pivoted position (closed position).

9. Tailgate for a vehicle according to one of Claims 1 to 8, **characterized in that** stop means (17) are provided on the load carrier (10), said stop means forming an end stop and defining an inwardly pivoted closed position of the load carrier (10).

10. Tailgate for a vehicle according to one of Claims 1 to 9, **characterized in that** a tilting module comprising a loading floor (11) and a tilting wall (12) can be placed onto a load carrier (10), which can be pivoted out of the tailgate (9) of a vehicle, and can be fastened releasably to said load carrier.

11. Motor vehicle **characterized by** a tailgate and/or a load carrier with the features of one of Claims 1 to 10.

## Revendications

1. Trappe arrière destinée à un véhicule, dans laquelle un porte-bagages supplémentaire est intégré dans la trappe arrière, ledit porte-bagages étant disposé de façon pivotable et/ou culbutable autour d'un axe par rapport à la trappe arrière et présentant au moins une surface de chargement disposée approximativement horizontalement dans une position sortie pour les biens à charger,
**caractérisée en ce que** le porte-bagages (10) comporte au moins une paroi basculante (12) reliée selon un angle approximativement droit fixe au fond de chargement (11) positionné dans la position sortie, ladite paroi reposant à l'intérieur du compartiment de chargement du véhicule dans la position sortie du porte-bagages.

2. Trappe arrière destinée à un véhicule selon la revendication 1, **caractérisée en ce que** la paroi basculante (12) forme une surface approximativement horizontale dans la position rentrée du porte-bagages (10) pour les biens à charger à l'intérieur du compartiment de chargement du véhicule.

3. Trappe arrière destinée à un véhicule selon la revendication 1 ou 2, **caractérisée en ce que** le côté extérieur de la surface de chargement (11) du porte-bagages (10) repose approximativement en affleurement dans le plan de la trappe arrière (9) dans la position rentrée du porte-bagages.

4. Trappe arrière destinée à un véhicule selon l'une quelconque des revendications 1 à 3, **caractérisée en ce que** la paroi basculante (12) du porte-bagages (10) verrouille le compartiment de chargement du véhicule vers l'extérieur dans la position sortie.

5. Trappe arrière destinée à un véhicule selon l'une quelconque des revendications 1 à 4, **caractérisée en ce que** le porte-bagages (10) comporte au moins une, de préférence deux parois latérales (14, 15) disposées des deux côtés, lesdites parois délimitant en côté un compartiment de chargement entre la surface de chargement (11) et la paroi basculante (12).

6. Trappe arrière destinée à un véhicule selon l'une quelconque des revendications 1 à 5, **caractérisée en ce qu'**au moins un élément d'étanchéité est prévu au niveau de la paroi basculante (12) et/ou au niveau de la trappe arrière (9), ledit élément étant étanchéifié entre la paroi basculante (12) et la trappe arrière (9) et/ou par rapport au compartiment de chargement du véhicule dans la position sortie du porte-bagages (10).

7. Trappe arrière destinée à un véhicule selon l'une quelconque des revendications 1 à 6, **caractérisée en ce que** des moyens sont prévus pour bloquer le porte-bagages (10) dans la position sortie.

8. Trappe arrière destinée à un véhicule selon l'une quelconque des revendications 1 à 7, **caractérisée en ce que** des moyens sont prévus, notamment sous la forme d'au moins un élément de ressort, pour soutenir le mouvement de fermeture/la fonction de basculement du porte-bagages (10) de la position sortie dans la position rentrée (position fermée).

9. Trappe arrière destinée à un véhicule selon l'une quelconque des revendications 1 à 8, **caractérisée en ce que** des moyens de butée (17) sont prévus, au niveau du porte-bagages (10), qui forment une butée finale et/ou définissent une position fermée rentrée du porte-bagages (10).

10. Trappe arrière destinée à un véhicule selon l'une quelconque des revendications 1 à 9, **caractérisée en ce qu'**un module de basculement comportant un fond de chargement (11) et une paroi basculante (12) peut être placé sur un porte-bagages (10) et peut être sorti pour sortir d'une trappe arrière (9) d'un véhicule et être fixé de façon amovible à elle.

11. Véhicule automobile, **caractérisé par** une trappe arrière et/ou un porte-bagages selon les caractéristiques de l'une quelconque des revendications 1 à 10.
